# EUROPÄISCHE PATENTSCHRIFT

(11) **EP 3 119 963 B1**
(45) Veröffentlichungstag und Bekanntmachung des Hinweises auf die Patenterteilung: **11.09.2019**
(21) Anmeldenummer: 15712833.1
(22) Anmeldetag: 18.03.2015
(51) Int. Cl.: E04H 9/02, F16F 15/02

(54) **SCHWINGUNGSISOLATOR**
VIBRATION ISOLATOR
DISPOSITIF D'ISOLATION VIS-À-VIS DES VIBRATIONS

(30) Priorität: 21.03.2014 DE 102014004059
(43) Veröffentlichungstag der Anmeldung: 25.01.2017
(73) Patentinhaber: Topole, Klaus Gregor, 45527 Hattingen (DE); Luig, Patrick, 44797 Bochum (DE); Iske, Andreas D.J., 58285 Gevelsberg (DE)
(72) Erfinder: TOPOLE, Klaus Gregor, 45527 Hattingen (DE); LUIG, Patrick, 44797 Bochum (DE)
(74) Vertreter: Buse, Mentzel, Ludewig Patentanwaltskanzlei
(86) Internationale Anmeldenummer: PCT/EP2015/055690
(87) Internationale Veröffentlichungsnummer: WO 2015/140214

(56) Entgegenhaltungen:
- EP-A2- 0 143 052
- WO-A1-01/59225
- WO-A1-95/23267
- DE-U1- 20 114 291
- DE-U1- 20 114 291
- JP-A- 2002 121 928

## Beschreibung

Die Erfindung betrifft einen Schwingungsisolator zum Schutz von Bauwerken mit dem Ziel, durch Erdbeben oder andere Ursachen hervorgerufene Erregerschwingungen abzufangen und dadurch die Bauwerke oder Komponenten der Bauwerke vor Beschädigungen oder gar Einsturz zu bewahren.

Die Einsatzmöglichkeiten des Schwingungsisolators in Bauwerken sind vielfältig und umspannen den gesamten Bereich vom traditionellen Hochbau bis zum Industrie- und Brückenbau. Selbst einzelne Komponenten eines Bauwerks oder Maschinen und Maschinenelemente oder Behälter lassen sich damit schützen.

Erdbeben zeichnen sich durch Bodenschwingungen sowohl in horizontaler als auch in vertikaler Richtung aus. Das Verhältnis der Horizontal- zur Vertikalerregerkomponente richtet sich dabei in erster Linie nach der Position des Bauwerks zum Epizentrum und der sogenannten Herdtiefe des Erdbebens. Im Regelfall ist die durch Erdbeben hervorgerufene Belastung in horizontaler Richtung größer als in vertikaler Richtung. Zudem fällt mit steigender Entfernung zum Epizentrum die Größe der vertikalen Erregerkomponente schneller als die der horizontalen Erregerkomponente. Daher konzentrieren sich Richtlinien zum Erdbebenschutz und gängige Schwingungsisolationsvorrichtungen in der Regel auf horizontale Erdbebenerregungen. Allerdings nimmt die vertikale Erregerkomponente insbesondere auch in der Nähe der Epizentren erhebliche Größenordnungen an, die bei der Auslegung von Bauwerken gegen Erdbebenlasten zu beachten sind.

Grundsätzlich besteht für Isolations- bzw. Dämpfungssysteme die Notwendigkeit, die Bodenerschütterungen möglichst von der Bewegung des aufgehenden Bauwerks oder umgekehrt zu entkoppeln. Nach dem einschlägig bekannten Stand der Technik sind hierzu prinzipiell verschiedene Mechanismen möglich:
- Durch Federsysteme wird der Versuch unternommen, die Bodenerschütterungen abzufangen. Dabei werden in der Regel Stahl- oder Elastomerfedern verwendet.
- Gleitlagersysteme ermöglichen dem aufgehenden Bauwerk über eine reibungsbehaftete Kontaktfläche auf dem Fundament zu gleiten.
- Kinematischen Isolationssystemen liegen Wälzkörper zugrunde, die zwischen dem aufgehenden Bauwerk und dem Fundament platziert werden. Sie ermöglichen ein Abrollen des aufgehenden Bauwerks auf dem Fundament.
- Darüber hinaus existieren Hybridsysteme, die oben genannte Mechanismen miteinander kombinieren.

Federsysteme mit Stahlfedern haben allgemein den Nachteil, dass sie sich nicht dazu eignen, sowohl die kritischen niedrigen Erregerfrequenzen, die typischerweise bei Erdbeben auftreten, zu isolieren und gleichzeitig die Last des Bauwerks zu tragen. Zudem weisen sie keine oder nur eine geringe Dämpfung auf, d.h. die Schwingungen klingen langsam ab und es kann in Fällen, in denen die Erregerfrequenz nahe der Eigenfrequenz (drohender Resonanzfall) des schwingungsfähigen Systems bestehend aus Bauwerk und Federn liegt, zu einem Aufschaukeln der Schwingungen kommen. Daher wird häufig eine hohe Energiedissipation durch Dämpfungs- oder Verformungseffekte im Material, wie z.B. bei Elastomerfedern, oder durch zusätzliche Dämpfungselemente angestrebt. Solche Systeme sind in den Dokumenten DE 102 33 023 B3, DE 30 47 762 A1, DE 30 18 818 C2, DE 689 02 949 T2, DE 26 28 276 C2, DE 601 10 919 T2 und DE 33 05 850 A1 zu finden.

Gleitlager und Gleitpendellager werden in den Dokumenten DE 10 2005 060 375 A1, DE 102 33 804 B3 und EP 0 419 478 B1 vorgestellt. Dort ist das aufgehende Gebäude mit einer Gleitplatte verbunden, die auf einem Gleitschuh horizontal beweglich gelagert ist. Der Gleitschuh ist dabei kippbar auf dem Fundament montiert. Dieses System ist in erster Linie auf die Isolation horizontaler Erschütterungen beschränkt. Erschwerend kommt bei Reibungs- und Gleitpendellagern wie z.B. in dem Dokument DE 10 2005 060 375 A1 hinzu, dass sie wegen der größeren Haftreibung gegenüber der kleineren Gleitreibung im Anfangszustand des Erdbebens keine hinreichende Isolation ermöglichen. Erst bei Anstieg der Erregerkräfte sinkt sprungartig die hohe Haftreibung zur niedrigeren Gleitreibung, so dass erst dann die eigentliche mechanische Isolation beginnen kann. Diese Anlaufhemmung führt dazu, dass große Teile der Erdbebenerregung nicht vom Bauwerk isoliert werden können.

Kinematische Lager aus Kugeln oder Rollen oder allgemein aus speziell geformten Abrollkörpern bilden eine Möglichkeit, horizontale Erdbebenerregungen ohne bzw. mit geringen Anlaufhemmungen zu isolieren. Solche Systeme werden in den Dokumenten DE 299 14 460 U1, DE 199 53 891 A1, DE 10 2005 022 734 A1, EP 0 143 052 A2, DE 195 35 197 C1, DE 38 19 591 A1, DE 2021 031 A1 und JP 2006-283958 A beschrieben. In den Dokumenten DE 299 14 460 U1 und DE 199 53 891 A1 werden Kugeln eingesetzt, die durch Abstandshalter voneinander getrennt sind. Bei dieser Konstruktion wird jedoch nicht sichergestellt, dass das Bauwerk nach dem Erdbeben wieder in seine ursprüngliche Lage zurückkehrt. Als Folge würde das Bauwerk dauerhaft deplatziert. In den Dokumenten DE 10 2005 022 734 A1 und EP 0 143 052 A2 werden Kugeln oder zylindrische Rollen eingesetzt, die nebeneinander in Mulden gelagert sind. Zwar kehrt damit das zu isolierende Gebäude nach kleineren horizontalen Erregungen in seine ursprüngliche Lage zurück, allerdings existiert keine Anschlagsbegrenzung für größere Erschütterungen. Als Folge könnten die Kugeln bzw. Rollen in einer benachbarten Mulde zum Stehen kommen, was das Bauwerk dauerhaft deplatziert würde. Im Dokument DE 195 35 197 C1 werden ebenfalls Kugeln eingesetzt, die durch Abstandshalter voneinander getrennt sind. Eine Begrenzung für starke Erschütterungen wird hier durch einen harten bzw. nahezu harten Anschlag realisiert, der jedoch dazu führen kann, dass es durch ruckartige Anschlagsbelastung zu Beschädigungen an Bauwerk und/oder Wälzlagersystem kommen kann. In den Dokumenten DE 38 19 591 A1, DE 2021 031 A1 und JP 2006-283958 A werden kinematische Isolationssysteme mit speziell geformten Wälzkörpern vorgestellt, die bei hohen Auslenkungen große Rückstellkräfte bilden. Damit kehrt das zu isolierende Bauwerk nach kleineren horizontalen Erregungen in seine ursprüngliche Lage zurück. Allerdings existiert bei all diesen Systemen entweder keine Begrenzung für hohe Auslenkungen oder diese Begrenzung wird durch einen harten Anschlag realisiert.

Die bisher genannten Systeme sind dahingehend limitiert, dass keine vertikalen und horizontalen Erregerkomponenten gleichermaßen isoliert oder gedämpft werden können. Hybridsysteme, die sowohl horizontale wie auch vertikale Schwingungen aufnehmen können, werden in den Dokumenten DE 30 40 181 A1, US 4 599 834 A, US 4,517,778 A, WO 95/23267 A1, DE 103 53 907 A1, DE 103 53 907 B4, JP 2003-293611 A, JP 2005-061211 A und DE 92 00 431 U1 beschrieben. Alle diese Systeme zeigen Nachteile, wie nachfolgend beschrieben. In den Dokumenten DE 30 40 181 A1 und US 4 599 834 A werden zur Isolation horizontaler Erregungen Gleitlager und Gleitpendellager eingesetzt. Dabei erfolgt im Dokument DE 30 40 181 A1 die Isolation vertikaler Erregungen durch ein System aus parallel angeordneten Stahlfedern, die eine lineare Kennlinie aufweisen. Solche Federn eignen sich nicht dazu, sowohl die kritischen niedrigen Erregerfrequenzen, die typischerweise bei Erdbeben auftreten, zu isolieren und gleichzeitig die Last des Bauwerks zu tragen. Im Dokument US 4 599 834 A erfolgt daher die Isolation vertikaler Erregungen durch ein System aus Tellerfedern mit in der Regel nichtlinearen Kennlinien, deren Arbeitsbereiche auf die Erregerfrequenzen eines Erdbebens eingestellt werden können. Die in diesem Dokument US 4 599 834 A gezeigte Schwingungsisolationsvorrichtung besitzt wie alle Gleitlager den Nachteil, dass kleine Erschütterungen durch die Anlaufhemmung dieser Systeme nicht gedämpft werden. Darüber hinaus ist der Wartungsaufwand sehr hoch. In den Dokumenten US Patent 4,517,778 A und JP 2005-061211 A werden zur Isolation horizontaler Erregungen Kugeln als Wälzkörper eingesetzt. Dabei werden im Dokument US 4,517,778 A die Kugeln durch Abstandshalter voneinander getrennt. Die Isolation vertikaler Erregungen erfolgt durch ein darunterliegendes System aus parallel und/oder seriell angeordneten Stahlfedern mit linearer Kennlinie, die nicht für die Isolation niedriger vertikaler Erregerfrequenzen geeignet sind. Im Dokument JP 2005-061211 A erfolgt die Isolation vertikaler Erregungen durch ein System aus Tellerfedern mit in der Regel nichtlinearen Kennlinien. Eine Umlenkung von horizontalen in vertikale Bewegungen erfolgt hier nicht. Stattdessen werden horizontale Erregungen durch ein quadratisches Kugellagerfeld bestehend aus ca. 64 bis 100 Kugeln isoliert, das einen verhältnismäßig hohen Wartungsaufwand zur Gewährleistung der Funktionsfähigkeit aufweist. Bei diesem System wird die horizontale Bewegung durch zwei horizontal angeordnete Stahlfedern mit linearer Kennlinie begrenzt. Im Dokument WO 95/23267 A1 werden horizontale Erschütterungen durch ein System aus zylindrischen Rollen und in vertikaler Richtung durch darunter angeordnete Stahlfederelemente mit linearer Kennlinie abgefangen. Damit können auch hier Erdbeben mit tiefen vertikalen Erregerfrequenzen nicht effektiv isoliert werden. Da sich die Rollen in Mulden befinden, kehrt das zu isolierende Gebäude nach Beendigung kleinerer horizontaler Erregungen in seine ursprüngliche Lage zurück. Allerdings existiert keine Anschlagsbegrenzung für größere Erschütterungen, so dass die Rollen in einer benachbarten Mulde zum Stehen kommen könnten. Als Folge würde das Bauwerk dauerhaft deplatziert. Eine ähnliche Vorrichtung mit vertikalen Federung ist auch aus der JP2002121928 bekannt. Im Dokument DE 103 53 907 A1 wird ein System mit einer Kugel in einer Mulde vorgestellt, die in vertikaler Richtung durch ein System aus Stahlfedern und Gummielementen federnd gelagert ist. Dieses System ist dadurch charakterisiert, dass tiefe vertikale Eigenfrequenzen nur bis 1,5 Hz gedämpft werden können. Tatsächlich zeigt eine Vielzahl von Erdbebenmessungen, dass reale vertikale Erregerfrequenzen mit bis zu 0,5 Hz erheblich niedriger ausfallen können, die durch ein solches System nicht mehr effektiv isoliert werden können. Zudem werden starke Erschütterungen durch harte Anschläge in Form von Verspannmitteln begrenzt, die dazu führen können, dass es durch ruckartige Anschlagsbelastung zu Beschädigungen an dem Bauwerk und/oder an dem Wälzlagersystem kommen kann. In dem Gebrauchsmuster DE 92 00 431 U1 wird ein kinematisches Isolationssystem mit speziell geformten Abrollkörpern vorgestellt, die bei hohen Auslenkungen große Rückstellkräfte bilden. Hier ist das Federsystem bestehend aus Tellerfedern mit in der Regel nichtlinearen Kennlinien zur Aufnahme vertikaler Erregungen nicht mehr unterhalb des Abrollkörpers angeordnet, sondern im komprimierbaren Abrollkörper integriert. Bei dieser Konstruktion ist jedoch eine Kippgefahr der Abrollkörper nicht ausgeschlossen. Diese Gefahr besteht insbesondere dann, wenn große horizontale Erregungen stattfinden, bei denen die Abrollkörper eine große Strecke abrollen und entlang ihrer Längsachse stark expandiert werden.

Es besteht deshalb die Aufgabe, eine Schwingungsisolationsvorrichtung bereitzustellen, die ein Bauwerk sowohl bei horizontaler als auch bei vertikaler Erregung möglichst gut mechanisch isoliert bzw. dämpft und dabei die folgenden Anforderungen erfüllt:
- Die mechanische Isolation bzw. Dämpfung soll möglichst keine Anlaufhemmungen aufweisen.
- Sie soll in der Gestalt so ausgebildet sein, dass das Bauwerk nach Ende des Erdbebens in die ursprüngliche Lage zurückkehrt.
- Sie soll so ausgebildet sein, dass der Schwingungsisolator selbst bei starken Erregungen seine Funktionsfähigkeit beibehält.
- Eine weitere Aufgabenstellung liegt darin, selbst niedrige Erregerfrequenzen von bis zu 0,5 Hz zu dämpfen, die bei Erdbeben in der Regel auftreten können.
- Eine weitere Aufgabenstellung liegt in einer möglichst preiswerten und wartungsarmen Ausführung.

Der erfindungsgemäße Schwingungsisolator löst diese Aufgabe, wobei die Vorrichtung
- einen Abrollkörper aufweist,
- welcher sich zwischen einer oberen und unteren Lagerschale befindet,
- die untere und/oder obere Lagerschale, vertikal gefedert und jeweils horizontal unverschieblich gelagert wird,
- der Abrollkörper rotationssymmetrisch ausgestaltet ist,
- die Abrollflächen des Abrollkörpers mit einem Radius ausgebildet werden, der größer ist als die halbe Höhe des Abrollkörpers und der Abrollkörper dadurch eine linsenförmige Form aufweist,
- die Abrollflächen der Lagerschalen eben oder abgerundet ausgestaltet sind,
- die vertikale Federung der unteren und /oder obere Lagerschale einen nichtlinearen S-förmigen Verlauf aufweist.

Es werden zum einen Abrollkörper eingesetzt, um die horizontalen Erdbebenerregungen ohne Anlaufhemmung aufzunehmen und es wird andererseits ein Federsystem vorgesehen, um die vertikalen Erregungen abzufangen. Das eingesetzte Federsystem besitzt eine nichtlineare Federkennlinie. Eine solche nichtlineare Federkennlinie weist drei verschiedene Bereiche auf, den degressiven Bereich mit steilem Anstieg, den Arbeitsbereich mit nahezu konstant bleibender Federkraft und einen sich anschließenden progressiven Bereich mit erneut steilem Anstieg der Federkraft. Der steile Anfangsbereich der nichtlinearen Feder dient dazu, die statische Last des aufgehenden Bauwerks aufzunehmen, während der weiche Arbeitsbereich der Feder dazu dient, die kritischen niedrigen Erregerfrequenzen eines Erdbebens mit bis 0,5 Hz zu isolieren. Durch die Kombination eines linsenförmigen Abrollkörpers und einer nichtlinearen Vertikalfeder wird erreicht, dass eine horizontale Auslenkung in eine vertikale Bewegung umgelenkt und dadurch die isolierende Wirkung der vertikalen Feder auch für horizontale Erregungen ausgenutzt wird.

Ein wichtiges Prinzip für die Funktionsweise des Schwingungsisolators liegt darin, dass die Aufteilung der Vertikalbewegung in Anhebung des Bauwerks und Federkompression im richtigen Verhältnis zueinander erfolgt. Maßgebend dafür ist die Festlegung der Parameter Radius (r) zu Höhe (h) des Abrollkörpers sowie Federsteifigkeit und Federweg der Feder. Durch diese Parameter lässt sich die Schwingungsisolationsvorrichtung auf die Erdbebencharakteristik und Bodenbeschaffenheit eines Erdbebengebietes und auf ein individuelles Bauwerk und dessen Gewicht anpassen.

In einer Ausgestaltung der Erfindung wird vorgesehen, dass die Abrollflächen mit form- und/oder kraftschlüssigen Elementen versehen werden, die ein Verspringen oder Verrutschen der Abrollkörper in den Lagerschalen verhindern. Hierdurch wird eine sichere Umlenkung einer horizontalen Erregung in eine vertikale Bewegung gewährleistet, um diese dann von der nichtlinearen Federung aufzunehmen, und es wird eine dauerhafte Deplatzierung des aufgehenden Bauwerks vermieden. Die form- und/oder kraftschlüssigen Elemente können bestimmte Geometrien der Abrollflächen wie beispielsweise ineinander greifende konzentrische Rillen sein, aber auch rutschhemmende Beschichtungen auf den Abrollflächen des Abrollkörpers und/oder der Lagerschalen. Solche konzentrischen Rillen können in der Schnittdarstellung z.B. als wellenförmig oder zahnförmig oder dreieckförmig oder ähnlich ausgestaltet sein.

In einer weiteren Ausgestaltung der Erfindung wird vorgesehen, dass die Abrollflächen der Lagerschalen im mittleren Bereich eben ausgeführt sind und eine Aufkantung erst außerhalb des mittleren Arbeitsbereiches beginnt. Dadurch werden kleine Bewegungen des Abrollkörpers wenig behindert und größere Auslenkungen progressiv gemindert. Diese progressive Minderung resultiert daraus, dass auf Grund der Aufkantung bei größeren Auslenkungen eine verstärkte Anhebung des Bauwerkes erfolgt und dadurch eine höhere Rückstellkraft in die neutrale Ausgangsposition generiert wird.

Eine weitere Ausgestaltung der Erfindung betrifft die Anordnung der vertikalen Federung, die so ausgeführt werden kann, dass diese Federung nicht nur durch eine einzige Feder unter bzw. über der Lagerschale, sondern auch durch mehrere, beispielsweise 4, 9 oder mehr Federn erfolgen kann. Liegen diese Federn nebeneinander kann hierdurch eine gewünschte Federkraft, d.h. eine gewünschte Gewichtaufnahme, eingestellt werden. Durch die Anordnung mehrerer Federn übereinander kann ein gewünschter Federweg konfiguriert werden.

Eine weitere Ausgestaltung der Erfindung betrifft den nichtlinearen S-förmigen Verlauf der vertikalen Federung. Eine solche Kennlinie kann sowohl durch eine spezielle Federgeometrie, wie z.B. bei Tellerfedern, als auch durch ein spezielles Federmaterial mit nichtlinearem Verhalten, wie z.B. bei Gummi oder bei besonders legierten Metallen (z.B. Formgedächtnislegierungen; engl. Shape Memory Alloys), erreicht werden. Werden Tellerfedern verwendet, kann die Federkraft durch die Anzahl der aufeinander gestapelten Federscheiben innerhalb eines Federpakets eingestellt werden. Werden mehrere Federpakete mit gegenläufiger Öffnung aufeinander gestapelt, so kann hierdurch der Federweg konfiguriert werden

Die erfindungsgemäße Vorrichtung wird anhand von 8 Figuren anhand der Zeichnung erläutert. Die Erfindung ist nicht auf diese Ausführungsbeispiele beschränkt.
Fig. 1 zeigt eine beispielhafte Anordnung mehrerer erfindungsgemäßer Schwingungsisolatoren unter einem Bauwerk.
Fig. 2 zeigt eine schematische Schnittdarstellung durch einen Abrollkörper im Ruhezustand und im ausgelenkten Zustand.
Fig. 3 zeigt eine perspektivische Darstellung eines Abrollkörpers.
Fig. 4 zeigt eine erfindungsgemäße Vorrichtung mit wellenförmigen konzentrischen Rillen in den Abrollflächen und einem Tellerfederpaket einmal im Ruhezustand und daneben im ausgelenkten Zustand.
Fig. 5 zeigt eine weitere erfindungsgemäße Vorrichtung mit zahnförmigen konzentrischen Rillen in den Abrollflächen und vier Tellerfederpaketen.
Fig. 6 zeigt eine weitere erfindungsgemäße Vorrichtung mit dreieckförmigen konzentrischen Rillen in den Abrollflächen und einer Federkonstruktion aus elastischem Material mit nichtlinearem Materialverhalten.
Fig. 7 zeigt eine weitere erfindungsgemäße Vorrichtung mit wellenförmigen konzentrischen Rillen in den Abrollflächen und zwei parallel angeordneten Spiralfedern aus nichtlinearem Material.
Fig. 8 zeigt nichtlineare Federkennlinien mit und ohne Hystereseverlauf.

Für gleiche Bauteile werden bei den unterschiedlichen Ausführungsbeispielen die gleichen Bezugszeichen verwendet.

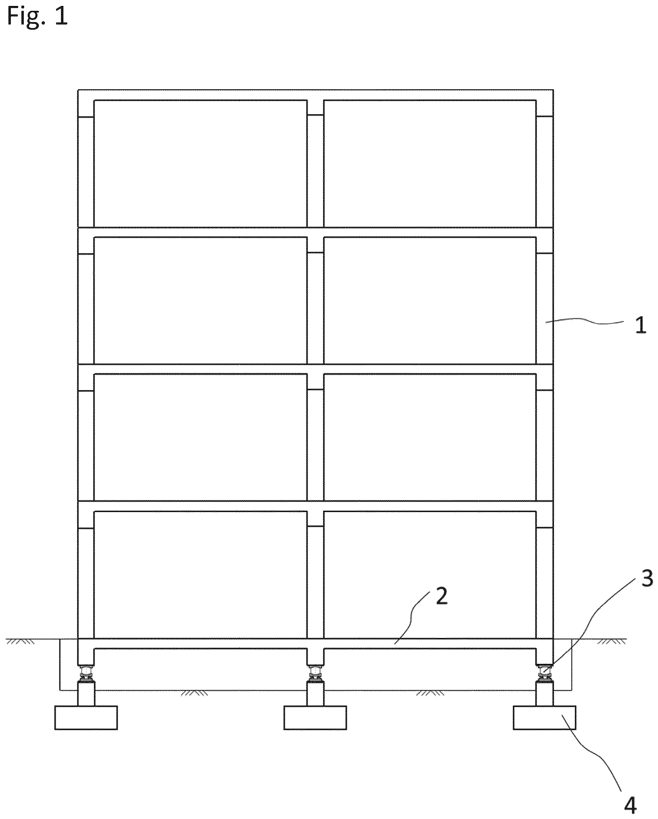

Fig. 1 zeigt eine beispielhafte Anordnung mehrerer Schwingungsisolatoren 3 unter einem Bauwerk 1. Die Schwingungsisolatoren 3 werden zwischen dem Fundament 4 und der Bodenplatte 2 des Bauwerks 1 angeordnet. Idealerweise befindet sich jeweils ein Schwingungsisolator 3 unter jedem Krafteinleitungspunkt wie beispielsweise in der Achse einer Stütze des Bauwerks 1. Bei ausreichender Steifigkeit der Bodenplatte 2 können die Schwingungsisolatoren 3 jedoch auch beliebig angeordnet werden. Das hier skizzierte Bauwerk 1 ist nur beispielhaft für ein beliebiges Bauwerk dargestellt. Gleichermaßen kann es sich dabei um nahezu jede Art von Bauwerken wie beispielsweise eine Brücke oder eine Industrieanlage oder auch um eine Maschine handeln.

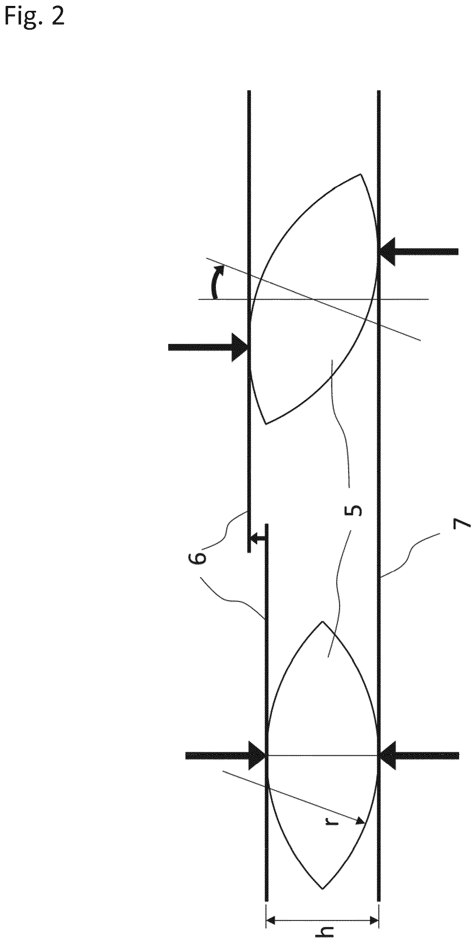

Fig. 2 zeigt eine schematische Schnittdarstellung durch einen Abrollkörper 5 zwischen zwei Lagerschalen 6, 7; nämlich auf der linken Seite im Ruhezustand und auf der rechten Seite im ausgelenkten Zustand. Es ist zu erkennen, dass die Radien (r) der Abrollflächen des Abrollkörpers 5 größer als die halbe Höhe (h) des Abrollkörpers 5 ausgebildet sind; mathematisch: r>h/2. Hier hat sich der Bereich zwischen r=0,5h und r=0,9h als vorteilhaft herausgestellt. Durch die linsenartige Form wird die obere Lagerschale 6 und damit das gesamte - in Fig. 2 nicht gezeigte Bauwerk 1 - im ausgelenkten Zustand angehoben. Als Folge des Anhebens entsteht durch das Eigengewicht des Bauwerks 1 eine Rückstellkraft, welche die Auslenkung des Abrollkörpers 5 progressiv begrenzt und den Abrollkörper 5 wieder in seine Ursprungsposition bringt.

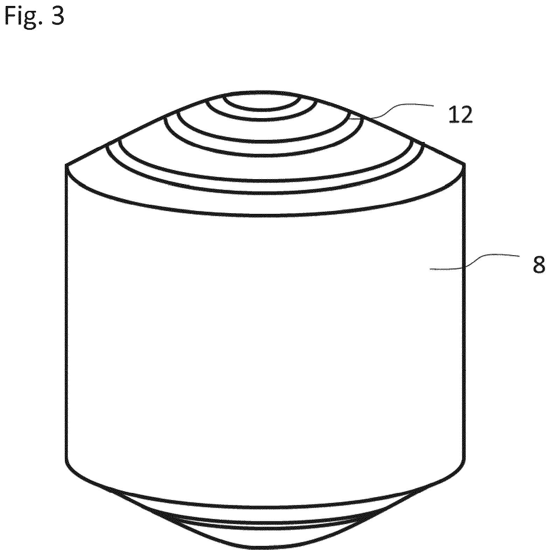

Fig. 3 zeigt die räumliche Darstellung eines vorteilhaften Abrollkörpers 8 mit seinen Abrollflächen 12, die konzentrische Rillen zeigen. Ein solcher Abrollkörper 8 entspricht dem Mittelteil eines in Fig. 2 gezeigten linsenförmigen Abrollkörpers 5. Die Rillen können im Schnitt ein wellenförmiges oder zahnförmiges oder dreieckförmiges oder ähnliches Profil zeigen. Entsprechende Rillen befinden sich auch auf den Abrollflächen 9 der Lagerschalen 6, 7. Durch die Anbringung der konzentrischen Rillen wird in jede beliebige Richtung ein ideales Abrollen erzwungen und ein horizontales Abdriften verhindert, d.h. die Abrollkörper 8 werden immer in eine neutrale Ausgangslage gezwungen. Es können auch Abrollkörper 8 mit einer glatten Abrollfläche 12 vorgesehen werden, die mit glatten Lagerschalen 6, 7 zusammenwirken. Ein Verrutschen solcher Abrollkörper 8 auf den glatten Abrollflächen 9 der Lagerschalen 6, 7 kann dann durch eine rutschhemmende Beschichtung einer oder beider Lagerschalen 6, 7 und gegebenenfalls auch der Abrollflächen 12 des Abrollkörpers 8 gemindert werden.

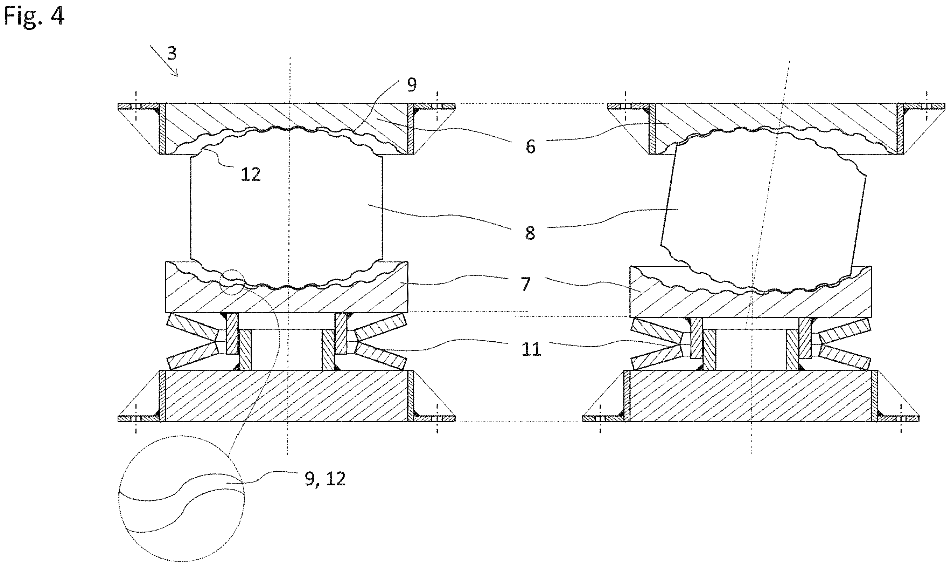

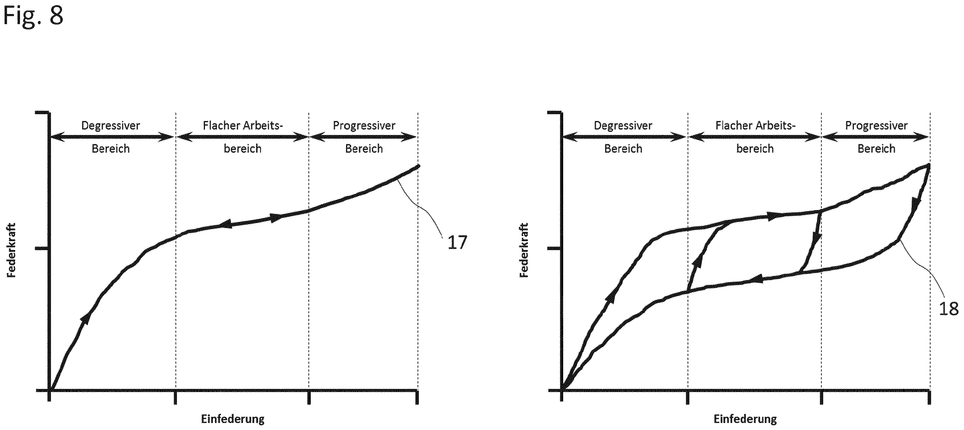

Fig. 4 zeigt einen erfindungsgemäßen Schwingungsisolator 3 mit einem linsenförmigen Abrollkörper 8 mit wellenförmig ausgestalteten Abrollflächen 9, angeordnet zwischen zwei Lagerschalen 6, 7. Die Abbildung zeigt den Schwingungsisolator 3 einmal im Ruhezustand und einmal im ausgelenkten Zustand. Durch das Vorsehen der konzentrischen Rillen sowohl auf den Abrollflächen 12 des Abrollkörpers 8 als auch auf den Abrollflächen 9 der Lagerschalen 6, 7 wird in jede beliebige horizontale Richtung ein ideales Abrollen erzwungen und ein horizontales Abdriften verhindert, d.h. der Abrollkörper 8 wird immer in seine Ausgangslage zurückgedrängt. Die untere Lagerschale 7 ist durch eine Federkonstruktion vertikal verschieblich aber horizontal unverschieblich gelagert. In dieser Variante wird die vertikale Federung durch Tellerfedern 11 erreicht, die sich insbesondere durch ihre nichtlineare Ausgestaltung der Federkennlinie eignen. Die Federkennlinie 17 von Tellerfedern wird in der DIN 2092 beschrieben und zeigt mit steigender Einfederung ein degressives Verhalten, d.h. die Tellerfeder 11 wird im Arbeitsbereich weicher. Tatsächlich erfolgt bei weiterer Zunahme der Vertikalbelastung erneut eine Verfestigung, was sich in der Federkennlinie 17 in der Gestalt äußert, dass sie über den Arbeitsbereich hinaus wieder steiler wird (siehe Fig. 8). Eine Hysterese findet hier nur in geringem Maße statt, weshalb die Be- und Entlastungskurven nahezu identisch sind. Das durch horizontale Erregung bewirkte vertikale Auslenken des Abrollkörpers 8 führt zu einer Kompression der nichtlinearen Vertikalfeder 11, was an dem skizzierten Absenken der unteren Lagerschale 7 zu erkennen ist.

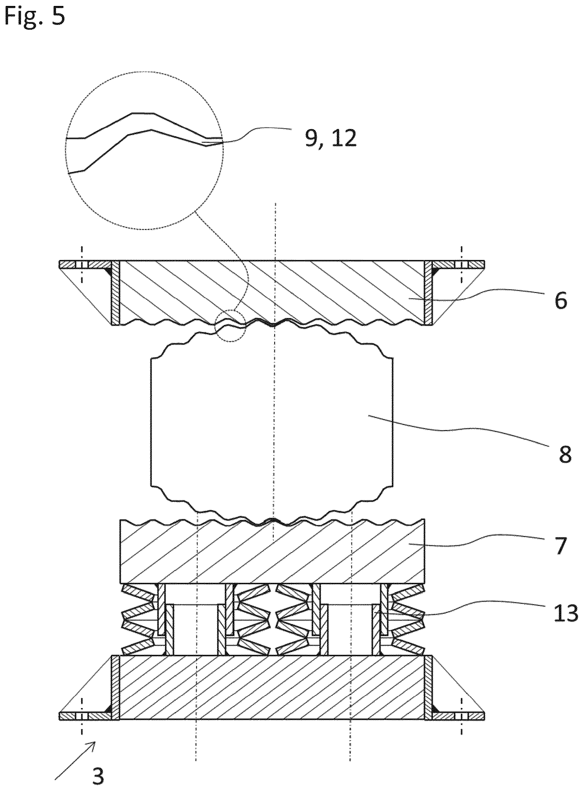

Fig. 5 zeigt eine Variation des Schwingungsisolators 3, die sich dadurch auszeichnet, dass die Abrollflächen 12 am Abrollkörper 8 und die Abrollflächen 9 der Lagerschalen 6, 7 mit zahnförmig ausgebildeten konzentrischen Rillen ausgestaltet sind. Diese Form ist insbesondere aus der dargestellten Vergrößerung zu ersehen. Die Lagerschalen 6, 7 verlaufen in diesem Beispiel in einer Ebene ohne seitliche Aufwölbung oder Aufkantung. In der hier dargestellten Variante ist unter der unteren Lagerschale 7 ein Paket 13 von vier Tellerfedern ausgebildet. Im Vergleich zu Fig. 4 sind in diesem Beispiel für eine höhere Gewichtsaufnahme mehr Tellerfedern nebeneinander angeordnet, wodurch eine höhere Federkraft realisiert ist. Des Weiteren sind mehrere Tellerfedern übereinander vorgesehen, wodurch sich der Federweg vergrößert.

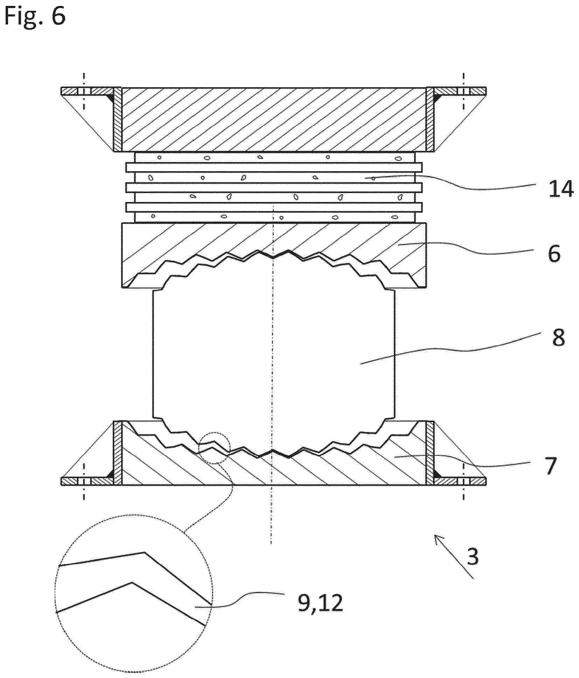

Fig. 6 zeigt eine Variation des Schwingungsisolators 3, in der die Abrollflächen 12 am Abrollkörper 8 und die Abrollflächen 9 an den Lagerschalen 6, 7 im Schnitt dreieckförmig ausgebildete konzentrische Rillen zeigen, die in der Vergrößerung verdeutlicht sind. Weiterhin zeigt Fig. 6 eine Variation des Schwingungsisolators 3, die sich dadurch auszeichnet, dass die Federung 14 über dem Abrollkörper 8 angeordnet ist. In der hier dargestellten Variation ist die vertikale Federung 14 durch ein Material mit nichtlinearem Verhalten (z.B. Elastomere, Formgedächtnislegierungen) ausgebildet. Mithin weisen solche Materialien einen Kraftverlauf in Form einer Hysterese auf, der sich durch unterschiedliche Kurven bei Be- und Entlastung auszeichnet (siehe Federkennlinie 18 in Fig. 8). Die Hysterese übernimmt dabei den wesentlichen Teil der Dämpfung, die durch das Flächenintegral zwischen Be- und Entlastungskurve charakterisiert ist.

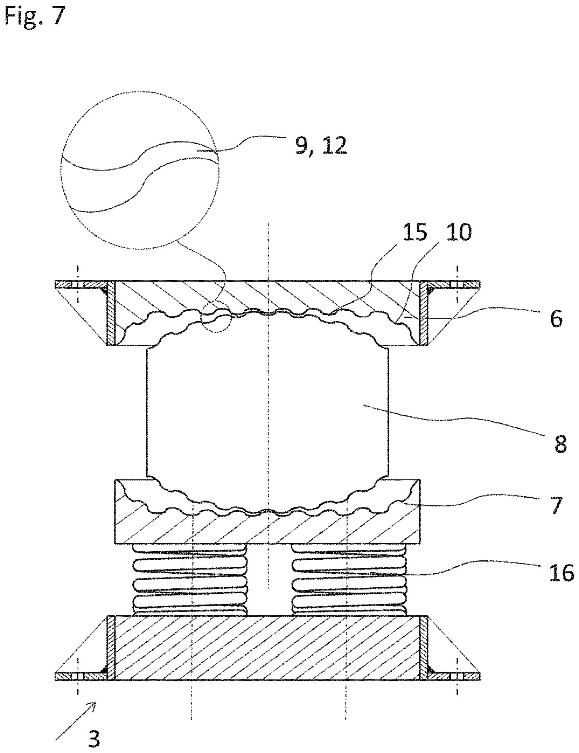

Fig. 7 zeigt einen weiteren erfindungsgemäßen Schwingungsisolator 3 mit wellenförmigen konzentrischen Rillen in den Abrollflächen 9, 12 von Abrollkörper 8 und Lagerschalen 6, 7. Die Lagerschalen 6, 7 sind hier im mittleren Bereich 15 eben ausgebildet. Eine Aufkantung 10 erfolgt erst außerhalb des mittleren Bereiches 15, so dass bei kleineren Auslenkungen eine moderate Rückstellkraft entsteht. Bei größeren Auslenkungen erfolgt ein starker Aufkantungseffekt, wodurch das Bauwerk progressiv angehoben und dadurch eine hohe Rückstellkraft in die neutrale Ausgangsposition gebildet wird. Im hier dargestellten Ausführungsbeispiel werden parallel angeordnete Spiralfedern 16 mit nichtlinearem Materialverhalten eingesetzt.

Fig. 8 zeigt sowohl eine nichtlineare Federkennlinie 17 einer Federkonstruktion bestehend z.B. aus Tellerfedern 11 als auch eine nichtlineare Federkennlinie 18 einer vertikalen Federung 14 bestehend z.B. aus einer pseudoelastischen Formgedächtnislegierung mit nichtlinearem Materialverhalten. Hier ist insbesondere der hystereseförmige Verlauf 18 zwischen Be- und Entlastung zu erkennen.

### Bezugszeichenliste

- 1: Bauwerk
- 2: Bodenplatte von 1
- 3: Schwingungsisolator
- 4: Fundament
- 5: Abrollkörper
- 6: obere Lagerschale
- 7: untere Lagerschale
- 8: Abrollkörper
- 9: Abrollflächen an 6, 7
- 10: Aufkantung
- 11: Tellerfeder
- 12: Abrollflächen an 8
- 13: Federpaket
- 14: Federelement aus speziellem Material mit nichtlinearem Materialverhalten
- 15: ebener mittlerer Bereich von 6, 7
- 16: Spiralfeder mit nichtlinearem Materialverhalten
- 17: Nichtlineare Federkennlinie ohne Hysterese
- 18: Nichtlineare Federkennlinie mit Hysterese

- h: Höhe Abrollkörper
- r: Radius Abrollflächen des Abrollkörpers

## Patentansprüche

1. Vorrichtung zur Schwingungsisolation von Bauwerken, Maschinen oder deren Komponenten,
- die einen rotationssymmetrischen Abrollkörper (5, 8) mit einer senkrecht zur Abrollfläche stehenden Symmetrieachse aufweist, welcher sich zwischen einer oberen Lagerschale (6) und einer unteren Lagerschale (7) befindet,
- wobei die Lagerschalen (6, 7) eben oder abgerundet ausgestaltet sind,
- wobei die obere Lagerschale (6) und/oder die untere Lagerschale (7) vertikal gefedert und horizontal jeweils unverschieblich gelagert sind,
**dadurch gekennzeichnet, dass**
- der Abrollkörper (8) eine linsenförmige Form aufweist oder dem Mittelteil eines linsenförmigen Körpers entspricht, wobei die Abrollflächen (12) des Abrollkörpers (8) mit einem Radius (r) ausgebildet sind, der größer als die halbe Höhe (h) des Abrollkörpers (8) ist und
- die vertikale Federung (11, 13, 14, 16) der unteren Lagerschale (7) und/oder der oberen Lagerschale (6) einen nichtlinearen S-förmigen Verlauf aufweist.

2. Vorrichtung nach Anspruch 1, **dadurch gekennzeichnet, dass** die Abrollflächen (12) des Abrollkörpers (8) und die Abrollflächen (9) der Lagerschalen (6, 7) mit form- und/oder kraftschlüssige Elementen versehen sind, die ein Verspringen oder Verrutschen des Abrollkörpers (8) in den Lagerschalen (6, 7) verhindern.

3. Vorrichtung nach Anspruch 2, **dadurch gekennzeichnet, dass** die Abrollflächen (12) des Abrollkörpers (8) und die Abrollflächen (9) der Lagerschalen (6, 7) jeweils mit konzentrische Rillen versehen sind, die ineinander greifen.

4. Vorrichtung nach Anspruch 2, **dadurch gekennzeichnet, dass** die Abrollflächen (12) des Abrollkörpers (8) und/oder die Abrollflächen (9) der Lagerschalen (6, 7) mit einer rutschhemmenden Beschichtung versehen sind.

5. Vorrichtung nach Anspruch 1 bis 4, **dadurch gekennzeichnet, dass** die Lagerschalen (6, 7) im mittleren Bereich (15) eben ausgeführt sind und erst außerhalb des mittleren Bereiches (15) eine Aufkantung (10) vorgesehen ist.

6. Vorrichtung nach Anspruch 1 bis 5, **dadurch gekennzeichnet, dass** die vertikale Federung durch eine oder mehrere Tellerfedern (11) bewirkt wird.

7. Vorrichtung nach Anspruch 1 bis 6, **dadurch gekennzeichnet, dass** die vertikale Federung ein Federelement (14) aus einem Material mit nichtlinearem Verhalten ist.

8. Vorrichtung nach Anspruch 6 bis 7, **dadurch gekennzeichnet, dass** die vertikale Federung durch mehrere nebeneinander und/oder übereinander angeordnete Federn (11) bzw. Federpakete (13) bewirkt wird, wobei durch mehrere nebeneinander angeordnete Federn (11) bzw. Federpakete (13) eine gewünschte Federkraft und wobei durch mehrere übereinander angeordnete Federn (11) bzw. Federpakete (13) ein gewünschter Federweg einstellbar ist.

9. Vorrichtung nach Anspruch 1 bis 8, **dadurch gekennzeichnet, dass** die Abrollflächen (12) des Abrollkörpers (8) mit einem Radius (r) ausgebildet sind, der in einem Bereich liegt zwischen r=0,5h und r=0,9h.

## Claims

1. Device for the vibration isolation of buildings, machines or their components,
- which has a rotationally symmetrical unwinding body (5, 8) with an axis of symmetry that is perpendicular to the unwinding surface and that is located between an upper bearing shell (6) and a lower bearing shell (7),
- wherein the bearing shells (6, 7) are flat or rounded,
- wherein the upper bearing shell (6) and/or the lower bearing shell (7) is vertically spring-mounted and each is mounted horizontally in a non-displaceable manner,
**characterised in that**
- the unwinding body (8) has a lenticular shape or corresponds to the central part of a lenticular body, the unwinding surfaces (12) of the unwinding body (8) being formed with a radius (r) that is greater than half the height (h) of the unwinding body (8) and
- the vertical suspension (11, 13, 14, 16) of the lower bearing shell (7) and/or of the upper bearing shell (6) has a non-linear S-shaped profile.

2. Device according to claim 1, **characterised in that** the unwinding surfaces (12) of the unwinding body (8) and the unwinding surfaces (9) of the bearing shells (6, 7) are provided with positive and/or non-positive elements that prevent the unwinding body (8) from jumping or slipping in the bearing shells (6, 7).

3. Device according to claim 2, **characterized in that** the unwinding surfaces (12) of the unwinding body (8) and the unwinding surfaces (9) of the bearing shells (6, 7) are each provided with concentric grooves that engage with one another.

4. Device according to claim 2, **characterised in that** the unwinding surfaces (12) of the unwinding body (8) and/or the unwinding surfaces (9) of the bearing shells (6, 7) are provided with a slip-resistant coating.

5. Device according to claim 1 to 4, **characterised in that** the bearing shells (6, 7) have a flat design in the central region (15) with a raised edge (10) being provided only outside the central region (15).

6. Device according to claims 1 to 5, **characterised in that** the vertical suspension is produced by one or more disc springs (11).

7. Device according to claims 1 to 6, **characterised in that** the vertical suspension is a spring element (14) made of a material with non-linear behaviour.

8. Device according to claims 6 to 7, **characterised in that** the vertical suspension is produced by a plurality of springs (11) or spring assemblies (13) arranged next to and/or above one another, whereby a desired spring force is being produced by a plurality of springs (11) or spring assemblies (13) arranged next to one another and a desired spring travel can be set by a plurality of springs (11) or spring assemblies (13) arranged above one another.

9. Device according to claims 1 to 8, **characterised in that** the unwinding surfaces (12) of the unwinding body (8) are formed with a radius (r) with a range between r=0.5h and r=0.9h.

## Revendications

1. Dispositif pour l'isolation des ouvrages, machines ou d'autres composants vis-à-vis des vibrations,
- présentant un corps à déroulé (5, 8) symétrique en rotation, avec un axe symétrique perpendiculaire à la surface de déroulé, corps qui se trouve entre une coque palier (6) supérieure et une coque palier (7) inférieure,
- sachant que les coques paliers (6, 7) sont configurées planes ou arrondies,
- sachant que la coque palier supérieure (6) et/ou la coque palier inférieure (7) sont amorties verticalement et, horizontalement, en appui chaque fois indéplaçable,
**caractérisé en ce que**
- le corps à déroulé (8) est de forme lenticulaire ou correspond à la partie médiane d'un corps de forme lenticulaire, sachant que les surfaces de déroulé (12) du corps à déroulé (8) sont configurées avec un rayon (r) plus grand que la demi-hauteur (h) du corps à déroulé (8) et que
- l'amortisseur vertical (11, 13, 14, 16) de la coque palier inférieure (7) et/ou de la coque palier supérieure (6) présente un tracé en S non linéaire.

2. Dispositif selon la revendication 1, **caractérisé en ce que** les surfaces de déroulé (12) du corps à déroulé (8) et les surfaces de déroulé (9) des coques paliers (6, 7) sont munies d'éléments reliés par adhérence de formes et/ou de forces, éléments qui empêchent de sauter ou glisser hors du corps à déroulé (8) dans les coques paliers (6, 7).

3. Dispositif selon la revendication 2, **caractérisé en ce que** les surfaces de déroulé (12) du corps à déroulé (8) et les surfaces de déroulé (9) des coques paliers (6, 7) sont respectivement munies de rainures concentriques qui engrènent les unes dans les autres.

4. Dispositif selon la revendication 2, **caractérisé en ce que** les surfaces de déroulé (12) du corps à déroulé (8) et/ou les surfaces de déroulé (9) des coques paliers (6, 7) sont munies d'un revêtement antidérapant.

5. Dispositif selon la revendication 1 à 4, **caractérisé en ce que** les coques paliers (6, 7) sont réalisées planes dans la zone médiane (15) et qu'elles ne sont munies d'un bord relevé (10) qu'en dehors de la zone médiane (15).

6. Dispositif selon la revendication 1 à 5, **caractérisé en ce que** l'amortisseur vertical est obtenu au moyen d'un ou de plusieurs ressorts assiettes (11).

7. Dispositif selon la revendication 1 à 6, **caractérisé en ce que** l'amortisseur vertical est un élément ressort (14) en un matériau ayant un comportement non linéaire.

8. Dispositif selon les revendications 6 et 7, **caractérisé en ce que** l'amortisseur vertical est obtenu au moyen de plusieurs ressorts (11) et/ou paquets (13) de ressorts juxtaposés et/ou superposés, sachant que plusieurs ressorts (11) et/ou paquets (13) de ressorts disposés juxtaposés permettent de régler une force de ressort souhaitée et sachant que plusieurs ressorts (11) et/ou paquets (13) de ressorts superposés permettent de régler une course de ressort souhaitée.

9. Dispositif selon la revendication 1 à 8, **caractérisé en ce que** les surfaces de déroulé (12) du corps à déroulé (8) sont configurées avec un rayon (r) située dans une plage comprise entre r = 0,5 h et r = 0,9 h.
